# FASCICULE DE BREVET EUROPEEN

(11) **EP 2 640 768 B1**
(45) Date de publication et mention de la délivrance du brevet: **07.01.2015**
(21) Numéro de dépôt: 11841514.0
(22) Date de dépôt: 14.11.2011
(51) Int. Cl.: C08G 63/08, C08G 63/82, C08G 63/87

(54) **PROCÉDÉ DE PRÉPARATION DE POLYMÈRES ÉTOILÉS**
VERFAHREN ZUR HERSTELLUNG VON STERNARTIGEN POLYMEREN
METHOD FOR PREPARING STAR POLYMERS

(30) Priorité: 15.11.2010 FR 1004427
(43) Date de publication de la demande: 25.09.2013
(73) Titulaire: IPSEN PHARMA S.A.S., 92100 Boulogne-Billancourt (FR)
(72) Inventeur: BOURISSOU, Didier, F-31830 Plaisance du Touch (FR); MARTIN-VACA, Blanca, F-31100 Toulouse (FR); ALBA, Aurélie, 31450 Noueilles (FR); CHERIF-CHEIKH, Roland, E-08860 Castelldefels (Barcelona) (ES); DE SOUSA DELGADO, Anne-Paula, E-08750 Molins de Rei (Barcelona) (ES)
(74) Mandataire: Audonnet, Nathalie
(86) Numéro de dépôt international: PCT/FR2011/000601
(87) Numéro de publication internationale: WO 2012/066194

(56) Documents cités:
- US-A- 5 434 241
- US-A1- 2006 149 030
- DONG C-M ET AL: "Synthesis of star-shaped poly(d,l-lactic acid-alt-glycolic acid) with multifunctional initiator and SnOct2 catalyst", POLYMER, ELSEVIER SCIENCE PUBLISHERS B.V, GB, vol. 42, no. 16, 1 juillet 2001 (2001-07-01), pages 6891-6896, XP004238885, ISSN: 0032-3861, DOI: DOI:10.1016/S0032-3861(01)00180-X
- ZHAO W; CUI D; LIU X; CHEN X: "Facile synthesis of hydroxyl-ended, highly stereoregular, star-shaped poly(lactide) from immortal ROP of rac-lactide and kinetics study", MACROMOLECULES, vol. 43, 28 juillet 2010 (2010-07-28), pages 6678-6684, XP002629271,
- ANDO A; KIMURA K; ONDA Y; YAMASHITA Y: "New attempt at the stereoselective polymerization of lactide by using crystallization during polymerization", MACROMOLECULAR RAPID COMMUNICATIONS, vol. 26, 21 janvier 2005 (2005-01-21), pages 98-102, XP002629272,
- BOURISSOU D; MARTIN-VACA B; DUMITRESCU A; GRAULLIER M; LACOMBE F: "Controlled cationic polymerization of lactide", MACROMOLECULES, vol. 38, 2 novembre 2005 (2005-11-02), pages 9993-9998, XP002629273,

## Description

### DOMAINE DE L'INVENTION

La présente demande a pour objet un procédé de préparation de polymères étoilés, à base de lactide et/ou de glycolide. Ce procédé est facilement contrôlable et présente une meilleure efficacité que les procédés de l'art antérieur. Il est particulièrement intéressant en ce que les polymères obtenus sont fonctionnalisés sur toutes les branches de l'étoile, et ce même dans le cas des oligomères.

### ETAT DE LA TECHNIQUE

De nos jours, une attention croissante est portée aux polymères synthétiques pour l'élaboration d'organes artificiels et la formulation de médicaments [Chem. Eng. News 2001, 79 (6), 30]. Les polymères concernés doivent respecter un certain nombre de critères et, en particulier, ils doivent être biocompatibles. Le caractère biodégradable est un avantage supplémentaire si le polymère doit être éliminé après une période appropriée d'implantation dans un organisme. A cet égard, les copolymères à base d'acide lactique et glycolique (PLGA) présentent un très grand intérêt car ils sont sensibles à l'hydrolyse et sont dégradés *in vivo* avec libération de sous-produits non-toxiques. Le champ d'application des PLGA est très vaste (Adv. Mater. 1996, 8, 305 et Chemosphere 2001, 43, 49). Dans le domaine chirurgical, ils sont utilisés pour la synthèse de fils multi-brins, de sutures, d'implants, de prothèses... En pharmacologie, ils permettent l'encapsulation, le transfert et la libération contrôlée de principes actifs. Pour toutes ces applications, un des facteurs clés est la vitesse de dégradation des PLGA qui dépend bien sûr de leur structure (longueur de chaîne, dispersité, proportion, stéréochimie et enchaînement des monomères...).

Les polymères branchés, parmi lesquels figurent les polymères en étoile, les dendrimères et les polymères hyperbranchés, ont fait l'objet de nombreuses études, de par leurs propriétés rhéologiques et mécaniques intéressantes.

En particulier, les polymères étoilés, ou polymères à architecture étoile, peuvent être utilisés dans l'administration de principes actifs et présentent des profils de libération intéressants. Ce type de polymère est généralement préparé à partir d'amorceurs polyols comportant n fonctions alcools pour conduire à des étoiles à n bras.

En outre, les polymères étoilés présentent des températures de transition vitreuse, ainsi qu'une viscosité à l'état vitreux, différentes de leurs équivalents linéaires. Il en est de même en ce qui concerne leur cristallinité - et donc leur température de fusion - qui est également différente de leurs équivalents linéaires. En particulier il est décrit que les polymères de haute masse moléculaire présentent une température de transition vitreuse et une température de fusion plus faibles que leurs équivalents linéaires. Cependant, la phase cristalline reste de même nature dans les deux architectures.

Un polymère étoile biodégradable (par exemple, le PLGA) aura une vitesse de dégradation initiale beaucoup plus rapide que son équivalent linéaire de même masse. En effet, il a été montré que par hydrolyse chimique ou enzymatique, les premières coupures de liaisons esters s'effectuent au coeur de l'étoile, proche de l'amorceur, libérant ainsi des polymères linéaires de masses moléculaires plus faibles. Ainsi, la vitesse de relargage et de dégradation est à mettre en corrélation avec la structure de la matrice polymère.

Ces différences de propriétés donnent donc accès à des matrices novatrices intéressantes. Par exemple, l'encapsulation de principes actifs dans des polymères étoilés pour des PLGA a été décrite par A. Breitenbach, Y. X. Li, T. Kissel, Journal of Controlled Release 2000, 64, 167.

La polymérisation par ouverture de cycle à partir de complexes métalliques pour la synthèse de polymères à architecture étoile a été décrite dès les années 1990. Ils sont principalement préparés en solution ou en masse, avec des catalyseurs métalliques tels que l'octanoate d'étain, même si d'autres systèmes à base de Fe, Zn, Al... ont été rapportés (H.R. Kricheldorf, Polymer for Advanced Technologies 2002, 13, 969 ; A. Finne, A.-C. Albertsson, Biomacromolecules 2002, 3, 684 ; H. R. Kricheldorf, H. Hachmann-Thiessen, G. Schwarz, Biomacromolecules 2004, 5, 492 ; I. Arvanitoyannis, A. Nakayama, E. Psomiadou, N. Kawasaki, N. Yamamoto, Polymer 1996,37,651).

Il existe très peu d'exemples dans la littérature de synthèse de polymères à base d'acide lactique (PLA) étoiles avec des catalyseurs non métalliques. En 2007, K. Numata, R. K. Srivastava, A. Finne-Wistrand, A.-C. Albertsson, Y. Doi, H. Abe, Biomacromolecules 2007, 8, 3115 a décrit pour la première fois la polymérisation enzymatique en masse du lactide en présence de polyols. Des PLA étoiles, de 2 à 22 branches, sont obtenus, avec des indices de polymolécularité compris entre 1,0 et 1,5, en présence de lipase PS, à 140° C, après 5 à 7 jours de polymérisation.

Les exemples de préparation de polyesters à architecture étoilé par l'intermédiaire de catalyseurs organiques concernent des monomères autres que le lactide, tels que la δ-valérolactone ou l'e-caprolactone (F. Sanda, H. Sanada, Y. Shibasaki, T. Endo, Macromolecules 2002, 35, 680 ; P. V. Persson, J. Casas, T.Iversen, A. Cordova, Macromolecules 2006, 39, 2819 et F. Zeng, H. Lee, M. Chidiac, C. Allen, Biomacromolecules 2005, 6, 2140). Avec les catalyseurs utilisés (acides fumarique ou lactique) les températures de réaction nécessaires sont relativement élevées (de l'ordre de 90° C).

Les exemples décrits en ouverture de cycle organocatalysée du lactide sont tous basés sur des macroamorceurs. Il n'existe aujourd'hui pas de système catalytique performant pour la synthèse d'oligomères de faibles masses molaires à partir d'un polyol, assurant une fonctionnalisation totale des bras.

La demanderesse a développé un nouveau procédé non-métallique, facilement contrôlable et présentant une meilleure efficacité que les procédés de l'art antérieur dans le cas des oligomères.

### RESUME DE L'INVENTION

L'invention a donc pour objet un procédé de préparation de polymères étoilés à base d'un monomère lactide et d'un monomère glycolide ou d'un monomère lactide, par ouverture de cycle en présence d'un catalyseur, dans lequel :
- le catalyseur a pour formule 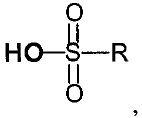 dans laquelle R est un haloalkyle en C₁ à C₆;
- l'amorceur est un polyol comprenant de 3 à 6 fonctions hydroxyle.

De préférence, le monomère est le lactide.

De préférence, les polymères sont préparés à base d'un monomère lactide et d'un monomère glycolide.

De préférence, la réaction a lieu dans un solvant organique, de manière encore plus préférée dans un solvant halogéné ou aromatique.

De préférence, le solvant est un solvant halogéné, de préférence, le solvant est le dichlorométhane.

De préférence, l'amorceur est un polyol comprenant de 3 à 4 fonctions hydroxyles.

De préférence, l'amorceur est le glycérol.

De préférence, le catalyseur est l'acide trifluorométhanesulfonique.

De préférence, la température de réaction est de 0 à 150° C, de manière plus préférée de 20 à 45° C.

De préférence, le rapport initial concentration en monomère / concentration en fonction OH de l'amorceur est de 200/1 à 1/1.

De préférence, le rapport initial concentration en monomère / concentration en fonctions OH de l'amorceur est de 100/1 à 2/1.

De préférence, le rapport initial concentration en monomère / concentration en fonctions OH de l'amorceur est de 20/1 à 4/1.

De préférence, le rapport initial concentration en catalyseur / concentration en fonction OH de l'amorceur est de 0,1 à 20.

De préférence, le rapport initial concentration en catalyseur / concentration en fonction OH de l'amorceur est de 0,2 à 10.

De préférence, le rapport initial concentration en catalyseur / concentration en fonction OH de l'amorceur est de 0,3 à 6.

### DESCRIPTION DETAILLEE DE MODES DE REALISATION DE L'INVENTION

L'invention a donc pour objet un procédé de préparation de polymères étoilés à base de lactide et/ou glycolide. Par polymère étoilé, on entend un polymère présentant un seul point de ramification d'où émanent plusieurs chaînes linéaires.

La réaction de polymérisation est de type ouverture de cycle. La polymérisation par ouverture de cycle est une polymérisation par addition. Elle peut se schématiser de la manière suivante : 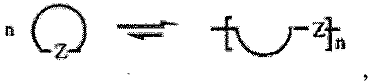 avec n le nombre de monomères.

La réaction est réalisée à partir d'un monomère lactide et d'un monomère glycolide, ou bien à partir d'un monomère lactide seul. Selon une variante, le monomère est le lactide. Selon une autre variante, la réaction est une co-polymérisation et la réaction est réalisée à partir de lactide et de glycolide.

La réaction est effectuée en présence d'un catalyseur, de formule 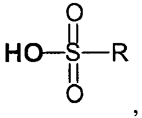 dans laquelle R représente un haloalkyle. Par haloalkyle, on entend un radical alkyl substitué par un ou plusieurs atomes d'halogène. Le radical alkyle comprend de 1 à 6 atomes de carbones, de préférence, de 1 à 4 atomes de carbone. L'atome d'halogène est choisi parmi F, Cl, Br et I. Par exemple, l'haloalkyle est C₂F₆ ou CF₃. De préférence, l'haloalkyle est CF₃.

L'amorceur de la réaction est un polyol comprenant de 3 à 6 fonctions hydroxyle, c'est-à-dire que l'amorceur est une molécule organique comprenant de 3 à 6 fonctions -OH. Le polyol tel que défini dans la présente invention peut être une chaîne carbonée aliphatique ou cyclique. Le polyol peut également contenir d'autres fonctions organiques, comme par exemple une ou des fonctions aldéhyde et/ou cétone. Par exemple, le polyol peut être choisi parmi le glycérol, le triméthyloléthane, le triméthylolpropane, le pentaérythritol, le dipentaérythritol, l'inositol, le xylitol, le mannitol, le sorbitol, l'érythrose, le thréose, l'arabinose, le ribose, le gulose, l'idose, l'altrose, l'alose, le talose, le sorbose, le mannose, le glucose, le fructose, le galactose, le sucrose, le lactose. De préférence, l'amorceur est le pentaérythritol, le dipentaérythritol, le glycérol, le triméthyloléthane, le triméthylolpropane, ou le sorbitol. De manière plus préférée, l'amorceur est le glycérol.

La réaction a lieu dans un solvant. Le terme "solvant" signifie ici un solvant unique ou un mélange de solvants. De préférence, le solvant est choisi de telle sorte que le polymère formé y soit soluble. De préférence, le solvant est choisi parmi les solvants halogénés et les solvants aromatiques. Par exemple, le solvant est choisi parmi le dichlorométhane, le dichloroéthane et le toluène. De préférence, le solvant est le dichlorométhane.

De préférence, la réaction est réalisée à une température comprise entre la température ambiante, c'est-à-dire environ 25° C, et la température d'ébullition du solvant choisi. La température de réaction est choisie de manière à être inférieure à la température de dégradation du polymère formé. Par exemple, la température est de 0 à 150° C. De préférence, la température est de 10 à 90° C. De préférence encore, la température est de 20 à 45° C, de préférence de 20 à 30° C. Par exemple, la réaction est réalisée à température ambiante.

De préférence, la réaction est arrêtée une fois le degré de polymérisation souhaité obtenu. Par exemple, la réaction est arrêtée quand la consommation du monomère initial est de 90 à 100 %. De manière préférée, la réaction est arrêtée quand la consommation du monomère initial est supérieure à 94 %. Par exemple, la réaction est arrêtée grâce à une trempe. Alternativement, la réaction est arrêtée par ajout d'une base. Par exemple, la réaction de polymérisation est arrêtée par ajout d'une résine basique, telle que par exemple l'Amberlyst™ A21.

De manière préférée, le rapport initial concentration en monomère sur la concentration en fonction OH de l'amorceur est de 200/1 à 1/1, de manière plus préférée de 100/1 à 3/1, de manière encore plus préférée de 20/1 à 4/1. Par exemple, le rapport est de 8/1 à 6/1.

De manière préférée, le rapport initial concentration en catalyseur sur concentration en fonction OH de l'amorceur est de 0,1 à 20, de manière plus préférée de 0,2 à 10, de manière encore plus préférée de 0,2 et 6.

Le procédé selon l'invention présente de nombreux avantages. Notamment, le procédé est facilement contrôlable. Il présente une meilleure efficacité que les procédés de l'art antérieur. En particulier, les polymères obtenus sont fonctionnalisés sur toutes les branches de l'étoile. Ceci est également vrai lors de la synthèse d'oligomères. Par oligomère, on entend un petit polymère, de préférence ayant une masse molaire inférieure à 2000 g/mol.

A moins qu'ils ne soient définis d'une autre manière, tous les termes techniques et scientifiques utilisés dans la présente demande ont la même signification que celle couramment comprise par un spécialiste ordinaire du domaine auquel appartient l'invention.

Les exemples suivants sont présentés pour illustrer l'invention et ne doivent en aucun cas être considérés comme une limite à la portée de l'invention.

### EXEMPLES

Dans les exemples qui suivent et, sauf indication contraire, les conditions de polymérisation suivantes sont appliquées : le triméthylolpropane (TMP) est utilisé après distillation azéotropique dans le toluène, le pentaérythritol (PET) est séché sous vide en présence de P₂O₅, et le glycérol est distillé. Sauf indication contraire, le lactide est utilisé sous sa forme racémique (D,L) dans le dichlorométhane ([L]₀ = 1 mol/L), en présence de 0,1 équivalent d'acide trifluorométhane sulfonique par alcool. Sauf indication contraire, les polymérisations sont effectuées à température ambiante (T = 26° C) sous une vive agitation. Les polymères sont obtenus dans des temps de réaction proches de ceux de leurs équivalents linéaires (environ 5-7 heures).

En fin de réaction, le catalyseur est neutralisé par la résine basique Amberlyst™ A21. Les polymères sont précipités dans un mélange CH₂Cl₂/heptane puis séchés sous vide sur un évaporateur rotatif pendant 48h.

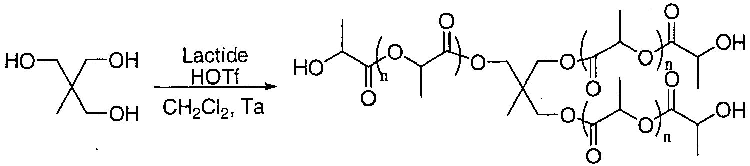

### Exemples 1 à 4 :

| **Ex** | Polyol | [OH]₀/[L]₀ /[HOTf]₀ | M_{M} | Iₚ | DP_{RMN} par bras | n(CH₂-OPLA) /n(CH₂-OH)₀ | Analyse Elémentaire | CH₂Cl₂ | Heptane |
|---|---|---|---|---|---|---|---|---|---|
| **1** | TMP | 1/9/0,3 | 2054* | 1,15 | 2,8 | 3/3 | | - | - |
| **2** | TMP | 1/6/0,3 | 1452 | 1,15 | 1,95 | 2,9/3 | F = 79 ppm | 1,22% | 0,79% |
| | | | | | | | S = 42 ppm | | |
| **3** | PET | 1/7,8/ 0,4 | 1689 | 1,26 | 1,8 | 3,7/4 | F = 39 ppm | 1,87% | 0,87% |
| | | | | | | | S = 28 ppm | | |
| **4** | Glycérol | 1/6/0,3 | 1516 | 1,12 | 1,95 | 2,9/3 | F = 58 ppm | 0,03% | 0,13% |
| | | | | | | | S = 21 ppm | | |

| | | | | | | | | | |
|---|---|---|---|---|---|---|---|---|---|
| * 91 % conversion - Tg = 7° C | | | | | | | | | |

Pour un ratio lactide/amorceur (amorceur = triméthylolpropane) de 3/1, un polymère blanchâtre et dur est obtenu (Tg = 7° C).

Pour un ratio de 2/1 (soit un ratio lactide/[OH]₀ de 6/1 pour le triméthylolpropane), le polymère amorcé au pentaérythritol est assez dur, alors que celui amorcé au glycérol est le plus fluide des trois (température de transition vitreuse Tg = 3° C).

Même à ce ratio monomère/amorceur, des polymères bien contrôlés sont obtenus (DP_{RMN} (degré de polymérisation mesuré par RMN) par bras proche du DP (degré de polymérisation) théorique de 2, indice de polymolécularité autour de 1,2) avec un bon amorçage sur tous les alcools : pour les triols, 2,9 CH₂ sur 3 ont amorcé. Cette mesure est déterminée par spectroscopie RMN ¹H sur l'intégration des CH₂-O-PLA (et CH-O-PLA pour le glycérol) par rapport aux signaux observés autour de 3,5 ppm (région caractéristique des CH₂-OH et CH-OH des amorceurs). L'étude par spectrométrie de masse par ionisation électrospray en mode positif confirme l'amorçage exclusif par le polyol de départ pour le triméthylolpropane et le pentaérythritol.

### Les exemples 5 à 7 ont été préparés selon le mode opératoire général suivant :

Le lactide (LA) et l'amorceur protique (polyol, 1 équivalent) sont dissous dans du dichlorométhane fraîchement distillé ([LA]₀ = 1 mol.L⁻¹). L'acide trifluorométhane sulfonique (acide triflique) (0,05 équivalent par OH) est ensuite ajouté et le milieu réactionnel est vivement agité à T = 26° C jusqu'à consommation totale du lactide, contrôlée par spectroscopie RMN ¹H.

4 équivalents (par rapport à l'acide triflique) de résine Amberlyst A21 (4,6 méq/g), préalablement séchée sur P₂O₅, sont ajoutés. Le milieu réactionnel est agité 45 minutes puis filtré. Par deux fois, 2 équivalents de résine Amberlyst A21 sont ajoutés au milieu réactionnel qui est agité 45 minutes puis filtré. Le solvant de réaction est ensuite évaporé sous vide et le polymère obtenu est précipité avec un mélange CH₂Cl₂/Heptane 5/90. Le surnageant est enlevé et le polymère est séché sous vide à 60° C pendant 48 heures.

### Exemple 5 : polymère amorcé au glycérol en présence de 4,5 équivalents de D,L-lactide.

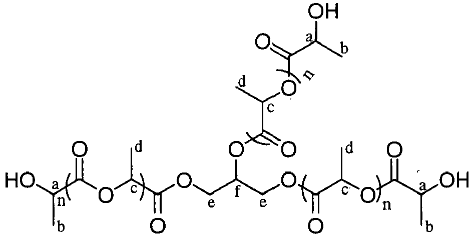

RMN ¹H (*δ*, DMSO-d₆, 300,1 MHz) : 5,48 (3H, m, OH), 5,30-5,05 (7,6H, m, CH_{c} et CH_{f}), 4,41-4,05 (7H, m, CH₂ₑ et CHₐ), 1,47 (19,7H, m, CH_{3d}), 1,30 (9,1H, m, CH_{3b}) ppm.
¹³C RMN (*δ*, DMSO-d₆, 75,5 MHz) : 174,0 (CO), 169,6-169,1 (CO), 69,9-67,7 (CHpol), 65,7 (CHOH), 65,4 (CHOH), 62,6-62,3 (CH₂O), 59,1 (CH₂OH), 20,4-20,2 (CH₃OH), 16,6-16,4 (CH₃pol) ppm.
DP_{RMN} = 4,5
% lactide résiduel (HPLC) : 0,6 %
SEC (THF): Mₙ = 1055, M_{w}/Mₙ = 1,09.

### Exemple 6 : polymère amorcé au triméthyloléthane en présence de 6 équivalents de D,L-lactide

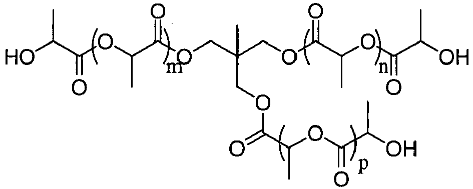

¹H RMN (*δ*, CDCl₃, 300,1 MHz) : 5,25-5,11 (9H, m, CH), 5,05 (3H, br s, OH), 4,37 (3H, m, *CH*-OH), 4,11-4,05 (6H, m, CH₂), 1,59-1,47 (35,2H, m, CH₃), 1,02 (3H, m, CH₃) ppm.
% lactide résiduel (HPLC) : 0,6%
DP_{RMN} = 5,9
SEC (THF): Mₙ = 1258, M_{w}/Mₙ = 1,15

### Exemple 7 : polymère amorcé au pentaérythritol en présence de 8 équivalents de D,L-lactide

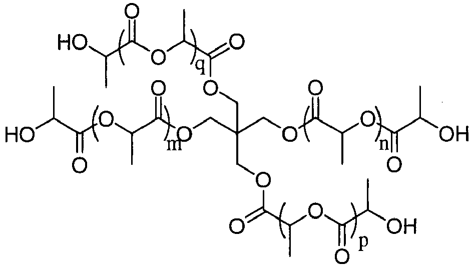

¹H RMN (*δ*, CDCl₃, 300,1 MHz) : 5,23-5,09 (12H, m, CH), 4,35 (4H, m, CH-OH), 4,22-4,16 (8H, m, CH₂), 1,58-1,47 (50,4H, m, CH₃) ppm.
DP_{RMN} = 8,4
SEC (THF): Mₙ = 1576, M_{w}/Mₙ = 1,26

### Exemples 8 à 10 : Synthèse de PLA de masses variées

Dans les exemples 8 à 10 suivants, le triméthyloléthane a été choisi comme amorceur. Pour toutes les polymérisations, le triméthyloléthane est utilisé après sublimation. Le lactide est utilisé soit sous forme racémique (D,L), soit sous forme énantiopure (*L*).

La longueur du polymère est dépendante du rapport initial [Monomère M]₀/[Amorceur I]₀. Différents ratios [M]₀/[I]₀ sont fixés pour chaque polymérisation dans le but d'obtenir des polymères de masses variées.

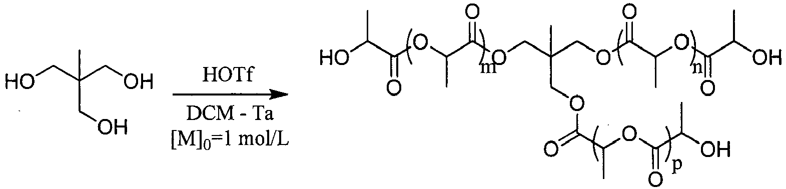

| Ex | [M]₀/[I]₀/[HOTf]₀ | Lactide | Temps | Conversion | M_{w} | Iₚ | DP_{RMN} par bras | n(CH₂-OPLA) / n(CH₂-OH)₀ |
|---|---|---|---|---|---|---|---|---|
| 8 | 30/1/3 | *D,L* | 1h30 | 96% | 5292 | 1,25 | 7,5 | 3/3 |
| 9 | 50/1/3 | *L* | 3h | 94% | 10108 | 1,10 | 14 | 3/3 |
| 10 | 100/1/3 | *L* | 7h30 | 96% | 17934 | 1,17 | 30 | 3/3 |

L'incorporation des CH₂OH de l'amorceur est complète (contrôlée par spectroscopie RMN ¹H) pour chaque polymère.

En outre, il est observé que plus ce ratio est élevé, plus la masse du polymère obtenu est importante.

### Protocole général de synthèse :

Le lactide et le polyol (1 équivalent) sont dissous dans du dichlorométhane fraîchement distillé ([LA]₀ = 1 mol.L⁻¹). L'acide triflique (1 équivalent par OH) est ensuite ajouté et le milieu réactionnel est vivement agité à T = 26° C jusqu'à consommation totale du lactide, contrôlée par spectroscopie RMN ¹H. En fin de polymérisation, 4 équivalents (par rapport à l'acide triflique) de résine Amberlyst A21 (4,6 méq/g), préalablement séchée sur P₂O₅, sont ajoutés. Le milieu réactionnel est agité 45 minutes puis filtré. Par deux fois, 2 équivalents de résine Amberlyst A21 sont ajoutés au milieu réactionnel qui est agité 45 minutes puis filtré. Le solvant de réaction est ensuite évaporé sous vide.

### Exemple 11 : Synthèse d'un copolymère PLGA 80/20 de forme étoile

Un copolymère PLGA de forme étoile et de ratio lactide/glycolide = 80/20 est synthétisé à partir du triméthyloléthane.

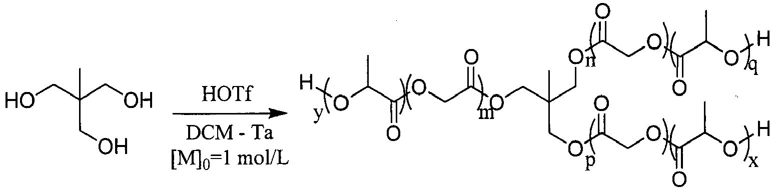

| Ex | [M]₀/[I]₀/[HOTf]₀ | Temps | Conversion | M_{w} | Iₚ | DP_{RMN} par bras | n(CH₂-OPLA) / n(CH₂-OH)₀ |
|---|---|---|---|---|---|---|---|
| 11 | 9/1/0,3 | 5h | 95% | 1898 | 1,16 | 3 | 3/3 |

Après 5h d'agitation, le glycolide est complètement consommé et il y a peu de lactide résiduel. Le DP_{RMN} par bras est proche du DP théorique (égal à 3) et la spectroscopie RMN ¹H permet de confirmer que l'amorçage a bien eu lieu sur tous les alcools du triméthyloléthane.

### Protocole de synthèse :

Le lactide (7,8 équivalents), le glycolide (1,2 équivalents) et le polyol (1 équivalent) sont mis en suspension dans du dichlorométhane fraîchement distillé ([LA]₀ = 1 mol.L⁻¹). L'acide triflique (0,1 équivalent par OH) est ensuite ajouté et le milieu réactionnel est vivement agité à T = 26° C jusqu'à consommation totale du lactide, contrôlée par spectroscopie RMN ¹H. En fin de polymérisation, 4 équivalents (par rapport à l'acide triflique) de résine Amberlyst A21 (4,6 méq/g), préalablement séchée sur P₂O₅, sont ajoutés. Le milieu réactionnel est agité 45 minutes puis filtré. L'opération est répétée une fois puis le solvant de réaction est évaporé sous vide.
¹H RMN (*δ*, CDCl₃, 300,1 MHz) : 5,30-5,10 (11,4H, m, CH), 4,90-4,70 (7H, m, CH₂), 4,36 (3H, m, CH), 4,07 (6H, m, CH₂), 3,82 (3H, br s, OH), 1,60-1,48 (41,4H, m, CH₃), 1,01 (3H, m, CH₃) ppm.
DP_{RMN} = 8,95
Ratio lactide/glycolide = 80/20 (par RMN ¹H)
SEC (THF): M_{w} = 1898, M_{w}/Mₙ = 1,16

### Exemple 12 : Synthèse d'un PLA étoile dans le toluène à 80° C

Dans cet exemple, le toluène est utilisé comme solvant après distillation et le mélange réactionnel est chauffé à 80° C.

| Ex | [M]₀/[I]₀/[HOTf]₀ | Temps | Conversion | M_{w} | Iₚ | DP_{RMN} par bras | n(CH₂-OPLA) / n(CH₂-OH)₀ |
|---|---|---|---|---|---|---|---|
| 12 | 9/1/0,3 | 30 min | 97 % | 2284 | 1,25 | 3 | 3/3 |

### Protocole de synthèse :

Le lactide (LA) et l'amorceur protique (polyol, 1 équivalent) sont mis en suspension dans du toluène fraîchement distillé ([LA]₀ = 1 mol.L⁻¹) et le milieu réactionnel est chauffé à 80° C sous atmosphère argon. L'acide triflique (0,1 équivalent par OH) est ensuite ajouté et le milieu réactionnel est vivement agité à T = 26° C pendant 30 minutes (consommation totale du lactide, contrôlée par spectroscopie RMN ¹H). 4 équivalents (par rapport à l'acide triflique) de résine Amberlyst A21 (4,6 méq/g), préalablement séchée sur P₂O₅, sont ajoutés. Le milieu réactionnel est agité 45 minutes à température ambiante puis filtré. Le solvant de réaction est ensuite évaporé sous vide.

Les données analytiques du polymère ainsi obtenu sont similaires à celles de l'exemple 1.

### Exemple 13 : Synthèse d'un PLA étoile à 6 branches

Le dipentaérythritol est préalablement séché sous vide en présence de P₂O₅. Le lactide est utilisé sous une forme énantiopure (*L*) dans le dichlorométhane ([LA]₀ = 1 mol/L), en présence de 0,1 équivalent d'acide triflique par alcool. Les polymérisations sont effectuées à température ambiante. En fin de réaction, le catalyseur est neutralisé par traitement avec la résine basique Amberlyst A21.

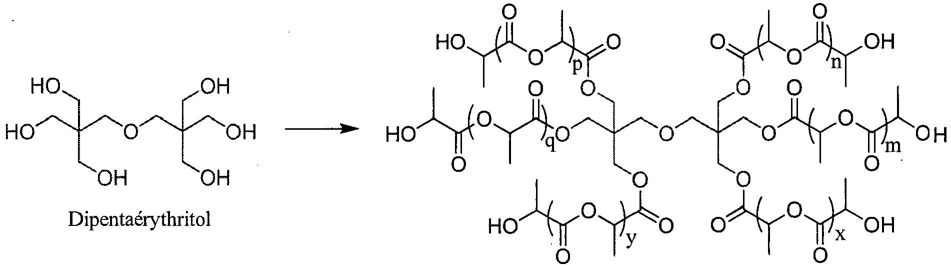

| Ex | [M]₀/[I]₀/[HOTf]₀ | Temps | Conversion | M_{w} | Iₚ | DP_{RMN} par bras | n(CH₂-OPLA) / n(CH₂-OH)₀ |
|---|---|---|---|---|---|---|---|
| 13 | 18/1/0,6 | 8h30 | 94% | 4320 | 1,20 | 3,1 | 3/3 |

Même pour un faible ratio monomère/amorceur, le polymère obtenu est bien contrôlé : le DP_{RMN} par bras est proche du DP théorique (égal à 3) et par spectroscopie RMN ¹H, l'intégration pour 12H des CH₂-O-PLA couplée à l'absence de signal autour de 3,5 ppm (région caractéristique des CH₂-OH de l'amorceur) permet d'affirmer que l'amorçage sur tous les alcools du dipentaérythritol est complet.

### Protocole de synthèse :

Le lactide (LA, 18 équivalents) et le dipentaérythritol (1 équivalent) sont mis en suspension dans du dichlorométhane fraîchement distillé ([LA]₀ = 1 mol.L⁻¹). L'acide triflique (0,05 équivalent par OH) est ensuite ajouté et le milieu réactionnel est vivement agité à T = 26° C jusqu'à consommation totale du lactide, contrôlée par spectroscopie RMN ¹H.

4 équivalents (par rapport à l'acide triflique) de résine Amberlyst A21 (4.6 méq/g), préalablement séchée sur P₂O₅, sont ajoutés. Le milieu réactionnel est agité 45 minutes puis filtré.

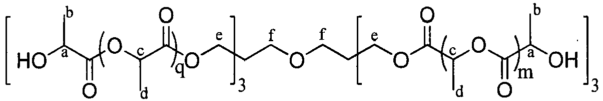

¹H RMN (*δ*, CDCl₃, 300,1 MHz) : 5,22-5,07 (30H, m, CH_{c}), 4,35 (6H, q, CHₐ), 4,14 (12H, br s, CH₂ₑ), 3,35 (4H, br s, CH_{2f}), 1,61-1,47 (111H, m, CH₃) ppm.
¹³C RMN (*δ*, CDCl₃, 75,5 MHz) : 175,1 (CO), 169,6 (CO), 69,9-67,7 (CHₚₒₗ + CH₂), 66,7 (CHOH), 62,8-62,7 (CH₂), 59,1 (CH₂OH), 20,5-20,3 (CH₃), 16,7-16,6 (CH₃ₚₒₗ) ppm.
DP_{RMN} = 18
SEC (THF): M_{w} = 4320, M_{w}/Mₙ = 1,20

## Revendications

1. Procédé de préparation de polymères étoilés à base d'un monomère lactide et d'un monomère glycolide ou d'un monomère lactide, par ouverture de cycle en présence d'un catalyseur, **caractérisé en ce que** :
- le catalyseur a pour formule 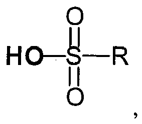 dans laquelle R est un haloalkyle en C₁ à C₆;
- l'amorceur est un polyol comprenant de 3 à 6 fonctions hydroxyle.

2. Procédé de préparation de polymères étoilés selon la revendication 1, dans lequel le monomère est le lactide.

3. Procédé de préparation de polymères étoilés selon la revendication 1, dans lequel les polymères sont préparés à base d'un monomère lactide et d'un monomère glycolide.

4. Procédé de préparation de polymères étoilés selon l'une des revendications 1 à 3, dans lequel la réaction a lieu dans un solvant organique, de préférence dans un solvant halogéné ou aromatique.

5. Procédé de préparation de polymères étoilés selon l'une des revendications 1 à 4, dans lequel le solvant est un solvant halogéné, de préférence, le solvant est le dichlorométhane.

6. Procédé de préparation de polymères étoilés selon l'une des revendications 1 à 5, dans lequel l'amorceur est un polyol comprenant de 3 à 4 fonctions hydroxyles.

7. Procédé de préparation de polymères étoilés selon la revendication 6, dans lequel l'amorceur est le glycérol.

8. Procédé de préparation de polymères étoilés selon l'une des revendications 1 à 7, dans lequel le catalyseur est l'acide trifluorométhanesulfonique.

9. Procédé de préparation de polymères étoilés selon l'une des revendications 1 à 8, dans lequel la température de réaction est de 0 à 150° C, de préférence de 20 à 45° C.

10. Procédé de préparation de polymères étoilés selon l'une des revendications 1 à 9, dans lequel le rapport initial concentration en monomère / concentration en fonction OH de l'amorceur est de 200/1 à 1/1.

11. Procédé de préparation de polymères étoilés selon la revendication 10, dans lequel le rapport initial concentration en monomère / concentration en fonctions OH de l'amorceur est de 100/1 à 2/1.

12. Procédé de préparation de polymères étoilés selon la revendication 11, dans lequel le rapport initial concentration en monomère / concentration en fonctions OH de l'amorceur est de 20/1 à 4/1.

13. Procédé de préparation de polymères étoilés selon l'une des revendications 1 à 12, dans lequel le rapport initial concentration en catalyseur / concentration en fonction OH de l'amorceur est de 0,1 à 20.

14. Procédé de préparation de polymères étoilés selon la revendication 13, dans lequel le rapport initial concentration en catalyseur / concentration en fonction OH de l'amorceur est de 0,2 à 10.

15. Procédé de préparation de polymères étoilés selon la revendication 14, dans lequel le rapport initial concentration en catalyseur / concentration en fonction OH de l'amorceur est de 0,3 à 6.

## Patentansprüche

1. Verfahren zur Herstellung von Sternpolymeren auf der Basis eines Lactid-Monomers und eines Glycolid-Monomers oder eines Lactid-Monomers durch Ringöffnung in Gegenwart eines Katalysators, **dadurch gekennzeichnet, dass**:
- der Katalysator die Formel 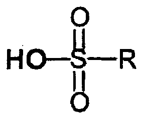 besitzt, wobei R ein C₁-C₆-Halogenalkyl ist;
- der Initiator ein Polyol ist, das 3 bis 6 Hydroxylfunktionen besitzt.

2. Verfahren zur Herstellung von Sternpolymeren nach Anspruch 1, wobei das Monomer Lactid ist.

3. Verfahren zur Herstellung von Sternpolymeren nach Anspruch 1, wobei die Polymere auf der Basis eines Lactid-Monomers und eines Glycolid-Monomers hergestellt werden.

4. Verfahren zur Herstellung von Sternpolymeren nach einem der Ansprüche 1 bis 3, wobei die Reaktion in einem organischen Lösungsmittel, vorzugsweise einem Halogenlösungsmittel oder aromatischen Lösungsmittel, stattfindet.

5. Verfahren zur Herstellung von Sternpolymeren nach einem der Ansprüche 1 bis 4, wobei das Lösungsmittel ein Halogenlösungsmittel ist, das Lösungsmittel vorzugsweise Dichlormethan ist.

6. Verfahren zur Herstellung von Sternpolymeren nach einem der Ansprüche 1 bis 5, wobei der Initiator ein Polyol ist, das 3 bis 4 Hydroxylfunktionen umfasst.

7. Verfahren zur Herstellung von Sternpolymeren nach Anspruch 6, wobei der Initiator Glycerin ist.

8. Verfahren zur Herstellung von Sternpolymeren nach einem der Ansprüche 1 bis 7, wobei der Katalysator Trifluormethansulfonsäure ist.

9. Verfahren zur Herstellung von Sternpolymeren nach einem der Ansprüche 1 bis 8, wobei die Reaktionstemperatur 0 bis 150 °C, vorzugsweise 20 bis 45 °C, beträgt.

10. Verfahren zur Herstellung von Sternpolymeren nach einem der Ansprüche 1 bis 9, wobei das Anfangsverhältnis Monomerkonzentration/Konzentration an OH-Funktion des Initiators 200/1 bis 1/1 ist.

11. Verfahren zur Herstellung von Sternpolymeren nach Anspruch 10, wobei das Anfangsverhältnis Monomerkonzentration/Konzentration an OH-Funktionen des Initiators 100/1 bis 2/1 ist.

12. Verfahren zur Herstellung von Sternpolymeren nach Anspruch 11, wobei das Anfangsverhältnis Monomerkonzentration/Konzentration an OH-Funktionen des Initiators 20/1 bis 4/1 ist.

13. Verfahren zur Herstellung von Sternpolymeren nach einem der Ansprüche 1 bis 12, wobei das Anfangsverhältnis Katalysatorkonzentration/ Konzentration an OH-Funktion des Initiators 0,1 bis 20 ist.

14. Verfahren zur Herstellung von Sternpolymeren nach Anspruch 13, wobei das Anfangsverhältnis Katalysatorkonzentration/Konzentration an OH-Funktion des Initiators 0,2 bis 10 ist.

15. Verfahren zur Herstellung von Sternpolymeren nach Anspruch 14, wobei das Anfangsverhältnis Katalysatorkonzentration/Konzentration an OH-Funktion des Initiators 0,3 bis 6 ist.

## Claims

1. Method for preparing star polymers based on a lactide monomer and a glycolide monomer or a lactide monomer, by ring opening in the presence of a catalyst, **characterized in that**:
- the catalyst has the formula 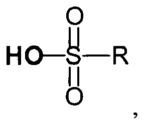 in which R is a C₁ to C₆ haloalkyl;
- the initiator is a polyol comprising from 3 to 6 hydroxyl functions.

2. Method for preparing star polymers according to claim 1, in which the monomer is lactide.

3. Method for preparing star polymers according to claim 1, in which the polymers are prepared based on a lactide monomer and a glycolide monomer.

4. Method for preparing star polymers according to one of claims 1 to 3, in which the reaction takes place in an organic solvent, preferably in a halogenated or aromatic solvent.

5. Method for preparing star polymers according to one of claims 1 to 4, in which the solvent is a halogenated solvent, preferably the solvent is dichloromethane.

6. Method for preparing star polymers according to one of claims 1 to 5, in which the initiator is a polyol comprising from 3 to 4 hydroxyl functions.

7. Method for preparing star polymers according to claim 6, in which the initiator is glycerol.

8. Method for preparing star polymers according to one of claims 1 to 7, in which the catalyst is trifluoromethanesulphonic acid.

9. Method for preparing star polymers according to one of claims 1 to 8, in which the reaction temperature is from 0 to 150°C, preferably from 20 to 45°C.

10. Method for preparing star polymers according to one of claims 1 to 9, in which the initial monomer concentration/OH function concentration ratio of the initiator is from 200/1 to 1/1.

11. Method for preparing star polymers according to claim 10, in which the initial monomer concentration/OH function concentration ratio of the initiator is from 100/1 to 2/1.

12. Method for preparing star polymers according to claim 11, in which the initial monomer concentration/OH function concentration ratio of the initiator is from 20/1 to 4/1.

13. Method for preparing star polymers according to one of claims 1 to 12, in which the initial catalyst concentration/OH function concentration ratio of the initiator is from 0.1 to 20.

14. Method for preparing star polymers according to claim 13, in which the initial catalyst concentration/OH function concentration ratio of the initiator is from 0.2 to 10.

15. Method for preparing star polymers according to claim 14, in which the initial catalyst concentration/OH function concentration ratio of the initiator is from 0.3 to 6.
